# EUROPEAN PATENT APPLICATION

(11) **EP 4 435 693 A1**
(43) Date of publication of application: **25.09.2024**
(21) Application number: 23163227.4
(22) Date of filing: 21.03.2023
(51) Int. Cl.: G06Q 10/067, H04L 9/00

(54) **A METHOD FOR ORGANIZING A RELATIONSHIP OF DECENTRALIZED AUTONOMOUS ORGANIZATIONS, COMPUTER PROGRAM PRODUCT, COMPUTER-READABLE STORAGE MEDIUM, ELECTRONIC COMPUTING DEVICE AS WELL AS AN ORGANIZING SYSTEM**

(71) Applicant: Siemens Aktiengesellschaft, 80333 München (DE)
(72) Inventor: Dimitrov, Dimitar, 80636 München (DE); Scharinger, Boris, 90762 Fürth (DE); Singh, Saurabh Narayan, 81739 München (DE); Stahnke, Susanne, 84547 Emmerting (DE)
(74) Representative: Siemens Patent Attorneys

(57) **Abstract**

The invention relates to a method for organizing a relationship of decentralized autonomous organizations (12, 14, 16) by an organizing system (10), comprising the steps of providing a partner network model (20) of the organizing system (10) for the decentralized autonomous organizations (12, 14, 16), wherein the partner network model (20) defines dependencies and/or rights and/or duties of each of the decentralized autonomous organizations (12, 14, 16); capturing an input for adopting the relationship by an input device (22) of the organizing system (10); generating a smart contract (26) for the relationship depending on the input and the partner network model (20) by a smart contract generation model (24) of the organizing system (10); and organizing the relationship depending on the generated smart contract (26). Furthermore, the invention relates to a computer program product, a computer-readable storage medium, an electronic computing device (18) as well as to an organizing system (10).

## Description

The present invention relates to a method for organizing a relationship of decentralized autonomous organizations by an organizing system according to the pending claim 1. Furthermore, the present invention relates to a computer program product, a computer-readable storage medium, an electronic computing device as well as an organizing system according to the further independent claims.

Currently, there is neither an automated nor model-based approach to define decentralized autonomous organizations (DAO). Currently, the process is manual, time consuming and error prone. Programming skills for respective programming language are required to implement smart contracts, which may define the decentralized autonomous organizations.

Therefore, there is a need in the art to introduce an automated model-driven approach to solve the problem with implementation hurdles around definition and deployment of decentralized autonomous organizations. Additionally, a use case perspective may be involved to understand the overall use case and the interactions between the participants and to implement this logic currently in the smart contract.

It is an object of the invention to provide a method, a computer program product, a computer-readable storage medium, an electronic computing device as well as an organizing system, by which organizing a relationship of decentralized autonomous organizations may be performed in an autonomous way.

This object is solved by a method, a computer program product, a computer-readable storage medium, an electronic computing device as well as an organizing system according to the independent claims. Advantageous embodiments are presented in the dependent claims.

One aspect of the invention relates to a method for organizing a relationship of decentralized autonomous organizations by an organizing system. A partner network model of the organizing system for the decentralized autonomous organizations is provided, wherein the partner network model defines dependencies and/or rights and/or duties of each of the decentralized autonomous organizations. An input for adopting the relationship by an input device of the organizing system is captured. A smart contract for the relationship depending on the input and the partner network model is generated by a smart contract generation model of the organizing system. The relationship is organized depending on the generated smart contract.

Therefore, an automated model-based approach to define and deploy the decentralized autonomous organizations based on a partner network model is introduced.

In particular, the method builds up on the partner network modelling approach and extends it to transform the model to a smart contract, defining the decentralized autonomous organizations. This has the advantage that a model-driven systematic approach is provided. Furthermore, an automated transformation reducing manual errors is provided. Furthermore, a faster deployment of the decentralized autonomous organizations may be provided. Therefore, an enhancement of the decentralized governance based on a smart contract may be realized.

In particular, a decentralized autonomous organization, which may be also called a decentralized autonomous corporation, is an organization constructed by rules and coded as a computer program that is often transparent, controlled by the organization members and not influenced by a central governance. In general terms, a decentralized autonomous organizations are member-owned communities without centralized leadership. For example, a decentralized autonomous organization's financial transaction records and program rules may be maintained on the block chain.

According to an embodiment, the generated smart contract is encrypted by a block chain model of the organizing system. A block chain may be, for example, a distributed ledger with growing lists of records, so-called blocks that are secure linked together via cryptographic hashes. Each block contains a cryptographic hash of the previous block, a time stamp, a transaction data. The time stamp proves that the transaction data existed when the block was created. Since each block contains information about the previous block, they effectively form a chain, with each additional block linking to the ones before. Consequently, block chain transactions are irreversible in that once they are recorded, the data in any given block cannot be altered reactively without altering all subsequent blocks. Therefore, a safe organization of the relationship may be provided.

In another embodiment, the partner network model is created depending on a role of one of the decentralized autonomous organizations and/or a name of the decentralized autonomous organizations and/or an attribute of the decentralized autonomous organizations by an identity management model of the organizing system. For example, the identity management model provides a look-up table for the partner network model. In particular, the partner network model may specify the relationship between all involved partners. The data includes actor, role, value objects, benefits and motivations, and risk of the partners. Therefore, an improved organizing a relationship of decentralized autonomous organizations may be performed in an autonomous way.

The partner network modelling tool represents a tool to model the partner network or to complement the partner network model with additional data. It provides the attribute legal entities and the roles of the partners. The identity management model provides identity information of the partner network model regarding the different partners. This information includes name, role, and contact data of the partner. There may be a look-up feature to form the partner network model to look for data in the identity management system and complement the partner network model.

In another embodiment, the dependencies and/or rights and/or duties of the decentralized autonomous organizations are defined depending on an actor and/or a role and/or a value of objects and/or benefits and/or motivations and/or risks of the decentralized autonomous organizations. Therefore, an improved organizing a relationship of decentralized autonomous organizations may be performed in an autonomous way.

In another embodiment, after the input the smart contract is generated automatically. Therefore, an automated process for adopting the smart contract may be provided. In particular, the smart contracts may be provided as a component which is responsible for the government of the decentralized autonomous organizations. The smart contract may deploy functions to deploy the decentralized autonomous organizations.

In another embodiment, the organizing system is provided by an electronic computing device. The electronic computing device may comprise processors, circuits, for example integrated circuits, and further electronic means for performing method steps. In particular, with the electronic computing device an autonomous method may be provided, which may introduce the automated model driven approach to solve the problem with the implementation hurdles around definition and deployment of the decentralized autonomous organizations.

In another embodiment, legal attributes of the decentralized autonomous organizations are taken into consideration by the organizing system. Therefore, also the legal attributes may be used in order to adopt the smart contract and therefore in order to organize the relationship between the decentralized autonomous organizations. Therefore, an improved organizing a relationship of decentralized autonomous organizations may be performed in an autonomous way.

In particular, the method is computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the invention relates to an electronic computing device comprising at least the computer-readable storage medium according to the preceding aspect. The electronic computing device may comprise at least processors, circuits, in particular integrated circuits, and further electronic means for performing the method.

Furthermore, the invention relates to an organizing system for organizing a relationship of decentralized autonomous organizations, comprising at least one partner network model, an input device, and a smart contract generation model, wherein the organizing system is configured for performing a method according to the preceding aspect. In particular, the method is performed by the organizing system.

Furthermore, the organizing system may at least comprise the electronic computing device according to the preceding aspect.

Advantageous forms of configuration of the method are to be regarded of as advantageous forms of the computer program product, the computer-readable storage medium, the electronic computing device as well as the organizing system. The electronic computing device as well as the organizing system may comprise electronic means for performing the method.

Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

The figures show in:
- Fig. 1: a schematic block diagram according to an embodiment of an organizing system; and
- Fig. 2: a schematic flow chart according to an embodiment of the method.

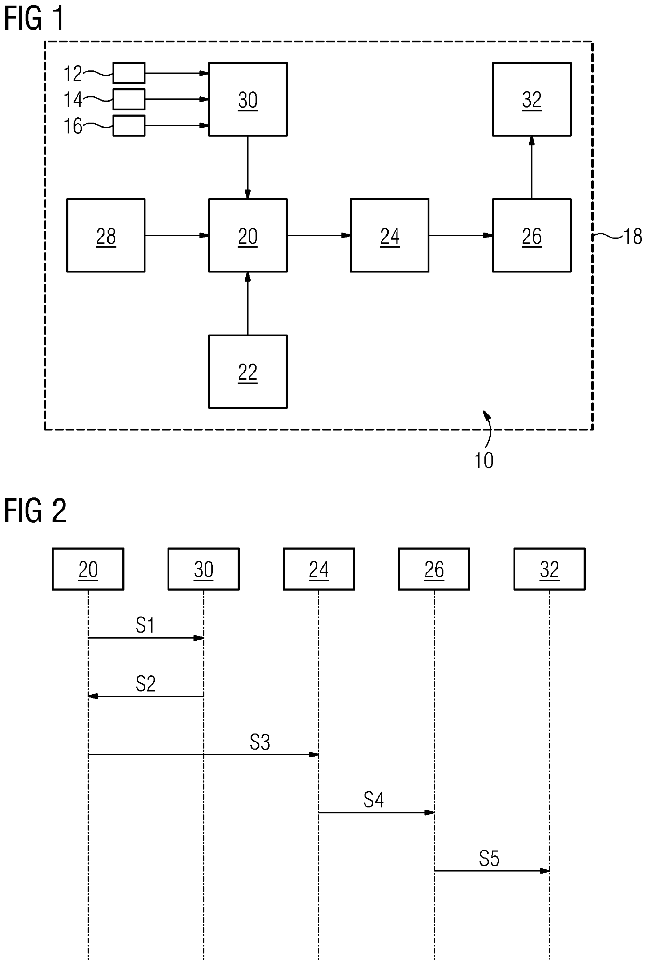

Fig. 1 shows a schematic block diagram according to an embodiment of an organizing system 10 for organizing a relationship of decentralized autonomous organizations 12, 14, 16. The organizing system 10 is at least configured as an electronic computing device 18. The organizing system 10 comprises at least one partner network model 20, one input device 22 and one smart contract generation model 24 for generating a smart contract 26.

Furthermore, Fig. 1 shows a so-called partner network model tool 28, an identity management model 30 as well as a block chain 32.

In particular, the shown embodiment aims to introduce an automated model-based approach to define and deploy the decentralized autonomous organizations 12, 14, 16 based on the partner network model 20. The partner network model 20 specifies the relationship between all involved partners, in particular of the decentralized autonomous organizations 12, 14, 16. The data may include, for example, actor, role, value objects, benefits and motivations, and risks of the partners.

The partner network modelling tool 28 represents a tool to model the partner network or to complement the partner network model 20 with additional data. It provides the attribute legal entities and the roles of the partners.

The identity management model 30 provides identity information of the partner network model 20 regarding the different partners. This information may include name, role, and contact data of the partner. There may be a look-up feature forming the partner network model 20 to look for data in the identity management model 30 and complement the partner network model 20.

The smart contract generation model 24 is responsible for the generation of the smart contract 26. It transforms the data from the partner network model 20 to the smart contract 26. The data from the partner network model 20 is transformed to the smart contract 26. The smart contract 26 is responsible for the government of the decentralized autonomous organizations 12, 14, 16. It has a deploy function to deploy the decentralized autonomous organizations 12, 14, 16.

The block chains 32 based on the decentralized autonomous organizations 12, 14, 16 are deployed based on the smart contracts 26.

Fig. 2 shows a schematic flow chart according to an embodiment of the invention. In a first step S1, the partner network model 20 is created by requesting an information about the partners from the identity management model 30. In a second step S2, the identity management model 30 provides the required information about the partners, for example, the role name and attributes. In a third step S3, the information in the partner network model 20 is provided to the smart contract generation model 24. The generator transforms the information based on the mapping rules into the smart contracts 26. In the fourth step S4, the smart contracts 26 are generated with all required information about the partners. In the fifth step S5, the smart contract 26 is used to deploy the decentralized autonomous organizations 12, 14, 16 to the block chain 32.

Therefore, in particular to the Fig. 1 and Fig. 2 show a method for organizing a relationship of the decentralized autonomous organizations 12, 14, 16 by the organizing system 10. The partner network model 20 is provided, wherein the partner network model 20 defines dependencies and/or rights and/or duties of each of the decentralized autonomous organizations 12, 14, 16. An input for adopting the relationship is captured by the input device 22 of the organizing system 10. The smart contract 26 is generated for the relationship depending on the input and the partner network model 20 by the smart contract generation model 24. The relationship is organized depending on the generated smart contract 26.

## Claims

1. A method for organizing a relationship of decentralized autonomous organizations (12, 14, 16) by an organizing system (10), comprising the steps of:
- providing a partner network model (20) of the organizing system (10) for the decentralized autonomous organizations (12, 14, 16), wherein the partner network model (20) defines dependencies and/or rights and/or duties of each of the decentralized autonomous organizations (12, 14, 16);
- capturing an input for adopting the relationship by an input device (22) of the organizing system (10);
- generating a smart contract (26) for the relationship depending on the input and the partner network model (20) by a smart contract generation model (24) of the organizing system (10); and
- organizing the relationship depending on the generated smart contract (26).

2. A method according to claim 1, wherein the generated smart contract is encrypted by a block chain model of the organizing system.

3. A method according to claim 1 or 2, wherein the partner network model (20) is created depending on a role of one of the decentralized autonomous organizations (12, 14, 16) and/or a name of the decentralized autonomous organizations (12, 14, 16) and/or an attribute of the decentralized autonomous organizations (12, 14, 16) by an identity management model (30) of the organizing system (10).

4. A method according to claim 3, wherein the identity management model (30) provides a look-up-table for the partner network model (20).

5. A method according to any of claims 1 to 4, wherein the dependencies and/or rights and/or duties of the decentralized autonomous organizations (12, 14, 16) are defined depending on an actor and/or a role and/or a value of objects and/or benefits and/or motivations and/or risks of the decentralized autonomous organizations (12, 14, 16).

6. A method according to any of claims 1 to 5, wherein after the input the smart contract (26) is generated automatically.

7. A method according to any of claims 1 to 6, wherein the organizing system (10) is provided by an electronic computing device (18).

8. A method according to any of claims 1 to 7, wherein legal attributes of the decentralized autonomous organizations (12, 14, 16) are taken into consideration by the organizing system (10) .

9. A computer program product comprising program code means for performing a method according to any of claims 1 to 8.

10. A computer-readable storage medium comprising at least the computer program product according to claim 9.

11. An electronic computing device (18) comprising at least the computer-readable storage medium according to claim 11.

12. An organizing system (10) for organizing a relationship of decentralized autonomous organizations (12, 14, 16), comprising at least one partner network model (20), an input device (22), and a smart contract generation model (24), wherein the organizing system (10) is configured for performing a method according to any of claims 1 to 8.
